# FASCICULE DE BREVET EUROPEEN

(11) **EP 1 055 047 B1**
(45) Date de publication et mention de la délivrance du brevet: **18.01.2006**
(21) Numéro de dépôt: 99959470.8
(22) Date de dépôt: 09.12.1999
(51) Int. Cl.: E06B 3/663

(54) **PROCEDE DE REALISATION D'UN VITRAGE ISOLANT SOUS VIDE**
HERSTELLUNGSVERFAHREN EINER EVAKUIERTEN ISOLIERVERGLASUNG
METHOD FOR MAKING A SEALED VACUUM DOUBLE GLAZING

(30) Priorité: 10.12.1998 FR 9815574
(43) Date de publication de la demande: 29.11.2000
(73) Titulaire: SAINT-GOBAIN GLASS FRANCE, 92400 Courbevoie (FR)
(72) Inventeur: DELHORME, David, F-60170 Cambronne les Ribecourt (FR); POIX, René, F-60400 Noyon (FR); DEMARS, Yves, 60600 Clermont (FR)
(74) Mandataire: Le Cam, Stéphane Georges Elie
(86) Numéro de dépôt international: PCT/FR1999/003080
(87) Numéro de publication internationale: WO 2000/034614

(56) Documents cités:
- EP-A- 0 421 239
- CA-A- 1 290 624
- US-A- 4 683 154
- US-A- 5 157 893

## Description

L'invention concerne un procédé de réalisation d'un vitrage isolant sous vide constitué de deux feuilles de verre maintenues espacées l'une de l'autre par des espaceurs et un joint de scellage périphérique.

Il est usuel pour obtenir une isolation thermique et/ou acoustique de réaliser des vitrages isolants comportants deux feuilles de verre séparées l'une de l'autre par une lame d air relativement importante. De tels vitrages apportent une isolation thermique jugée insuffisante pour certaines applications. Pour y remédier, il est connu de réaliser des vitrages comportant trois feuilles de verre et l'une des lames d'air pouvant être remplacée par un gaz, par exemple le krypton. Ces vitrages ont des propriétés d'isolation thermique nettement améliorées mais sont d'une épaisseur telle qu'il n'est pas toujours aisé de les utiliser.

Par ailleurs, la demande actuelle des utilisateurs s oriente vers une isolation thermique des vitrages équivalente à celle des parois pleines, c'est-à-dire des murs.

Il a déjà été proposé notamment dans le brevet WO 91/02 878 des vitrages isolants constitués de deux feuilles de verre séparées l'une de l'autre par un espace dans lequel le vide a été réalisé

Ces vitrages procurent du fait du vide une très bonne isolation mais iis sont très difficiles à réaliser. D'une part, la faible épaisseur entre les deux feuilles de verre qui est de quelques dixièmes de millimètres doit être constante sur toute la zone où les feuilles de verre sont en regard. D'autre part, il faut réaliser un scellage des deux feuilles de verre parfaitement étanche.

Le brevet WO 91/02 878 décrit une technique consistant à placer des plots de quelques dixièmes de millimètres d'épaisseur sur l'une des feuilles de verre. répartis sur toute la surface et dans le même temps un joint qui permettra le scellage des deux feuilles. Ces plots et ce joint sont réalisés dans la même matière qui est une composition verrière. Il apparaît, que ce vitrage est difficile à réaliser du fait de ces opérations simultanées qui nécessitent des opérations délicates.

La demande de brevet FR 96/09 632 décrit un procédé pour réaliser le vide entre deux feuilles de verre pouvant constitué un vitrage isolant. Selon ce procédé, le collage des espaceurs est réalisé par dépôts successifs de plots de composé minéral de collage par exemple par sérigraphie, puis des espaceurs par un outillage aspirant percé de trous plus petits que lesdits espaceurs au même pas que les plots obtenus. Les espaceurs selon ce procédé ont une forme sphérique bi-tronquée à faces parallèles. Un tel procédé nécessite un appareillage compliqué et une précision des opérations importantes.

Le brevet US 4 683 154 décrit, pour un vitrage isolant sous vide, une technique de déversement d'espaceurs en verre sur l'un des substrats en verre, les espaceurs étant solidarisés par soudage au moyen d'un rayon laser. Mais cette technique demande également une précision des opérations importantes que sont le placement des espaceurs et le positionnement exact du rayon laser pour chaque espaceur.

L'invention a pour but un procédé pour réaliser un vitrage isolant sous vide, simple de réalisation.

Ce but est atteint selon l'invention par un procédé pour réaliser un vitrage isolant sous vide constitué de deux feuilles de verre maintenues espacées l'une de l'autre par des espaceurs et un joint de scellage périphérique consistant après avoir déposé les espaceurs entre les deux feuilles de verre, à réaliser le joint de scellage en périphérie et à effectuer le vide. Ledit procédé est tel qu'on dépose sur une des feuilles de verre des points de colle d'un diamètre inférieur ou égal au diamètre des espaceurs, on fait rouler les espaceurs sur ladite feuille de verre de manière à ce qu'un unique espaceur se colle sur chaque point de colle et on dépose la seconde feuille de verre sur les espaceurs et le joint de scellage périphérique.

Selon un mode de réalisation préféré de l'invention, on fait rouler des espaceurs sphériques. De cette manière, la forme de l'espaceur ne conditionne pas la dépose en elle-même.

Selon un mode de réalisation avantageux de l'invention, lors de l'étape de dépose des espaceurs, la feuille de verre est inclinée d'au moins 1°. Ainsi, l'inclinaison permet la rencontre des espaceurs avec les points de colle et permet également l'evacuation des espaceurs par roulage hors de la feuille lorsque ceux-ci n'ont pas rencontré de point de colle. Selon un mode de réalisation préféré de l'invention, la dépose des points de colle est réalisée par sérigraphie.

Avantageusement, les points de colle sont des points d'émail.

Selon un mode de réalisation préférée de l'invention, durant la phase de réalisation du vide, les espaceurs s'écrasent légèrement.

Selon une réalisation préférée de l'invention, les espaceurs ont un diamètre d₁ compris entre 0,2 et 0,6 mm et le diamètre d₂ des points de colle est égal à (d₁ - 0,1 mm).

Selon une réalisation avantageuse de l'invention, les espaceurs sont légèrement écrasés entre les deux feuilles de verre de manière à présenter des surfaces de contact non ponctuelles épousant la déformation du verre.

De préférence, la colle est un composé minéral et avantageusement un émail à médium durcissant par séchage ou polymérisation.

Selon une réalisation préférée de l'invention, l'espaceur métallique présente un module d'Young inférieur ou égal à 250 GPa et une limite élastique inférieure ou égale à 520 MPa.

Selon une réalisation avantageuse de l'invention, l'espaceur est en acier inoxydable.

D'autres détails et caractéristiques avantageuses de l'invention ressortiront ci-après de la description d'un exemple de réalisation selon l'invention faite en référence aux figures qui représentent :
- Figure 1 : une vue de dessus d'un vitrage isolant sous vide selon l'invention.
- Figure 2a, b et c : des schémas illustrant les étapes successives du procédé selon l'invention.

On précise tout d'abord que, par souci de clarté, toutes les figures ne respectent pas rigoureusement les proportions entre les divers éléments représentés.

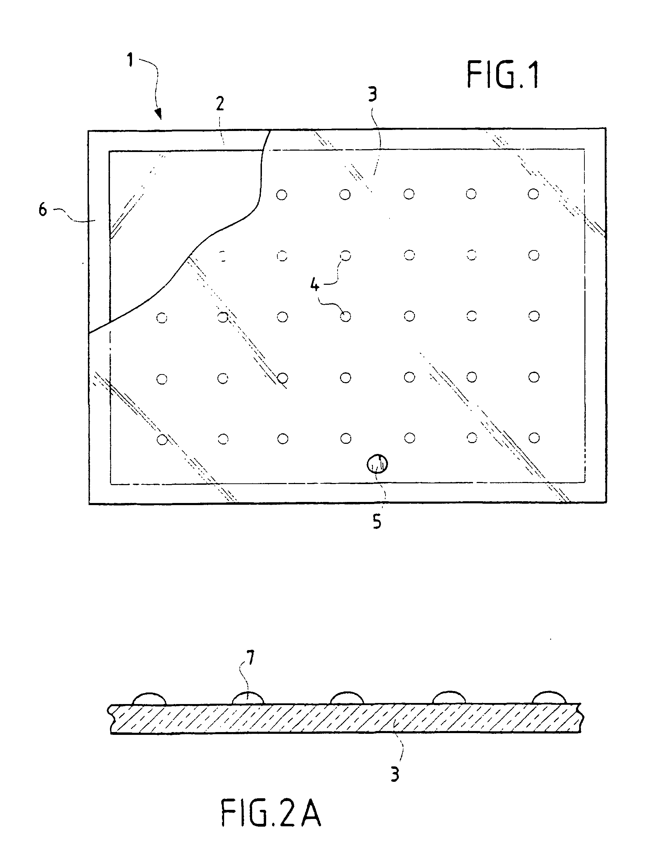

Sur la figure 1 est représentée une vue de dessus d'un schéma d'un vitrage isolant sous vide 1. Celui-ci se compose de deux feuilles de verre 2 et 3 maintenues à distance l'une de l'autre par des espaceurs 4 visibles en transparence sur la figure 1. Les feuilles de verre ont une épaisseur de 4 mm et ont préalablement subi un traitement de trempe thermique en vue du renforcement de leur propriétés mécaniques afin qu'elles supportent les contraintes qui s'exercent lors de la réalisation du vide.

Sur la figure 1 il apparaît que ces espaceurs 4 sont répartis sur toute la surface du vitrage de façon régulière. Ils sont distants les uns des autres d'une distance de 30 millimètres. Cette répartition des espaceurs 4 permet de maintenir un espace entre les feuilles de verre 2 et 3. Leur nombre, dimension et répartition sont déterminés pour garantir une bonne résistance du vitrage et prévenir tout risque de contact entre les feuilles de verre 2 et 3 et de façon à ne pas créer de pont thermique trop important et ne pas gêner la transmission lumineuse.

Par ailleurs, les espaceurs 4 sont réalisés en acier inoxydable sous la forme de bille de 0,3 mm de diamètre. Les espaceurs possèdent ainsi différentes propriétés nécessaires pour leur utilisation et plus particulièrement une faible conductivité thermique qui permet d'éviter la création de pont thermique entre les deux feuilles de verre 2 et 3. Ils présentent également une bonne résistance à la compression avec un module d'Young de 250 GPa et une limite élastique de 517 MPa et une bonne ténacité assurant une bonne tenue de vitrage durant la réalisation du vide puis lors de son utilisation.

Sur la figure 1 apparaît également le disque 5 qui bouche le trou ayant servi à faire le vide dans le vitrage 1. Ce disque est réalisé en cuivre Il peut être positionné n importe où sur le vitrage et de préférence sur un bord par souci de discrétion. De préférence encore, il est situé au centre d'une grande longueur du vitrage comme représenté sur la figure 1 ; ceci est avantageux lors de la réalisation du vide car une telle position permet notamment de diminuer au maximum le temps de pompage pour une aspiration donnee. Bien entendu, l'invention n'est pas limitée à ce type de réalisation, tout autre moyen de sceller définitivement le vitrage entre dans le cadre de l'invention.

Sur la figure 1 apparaît encore le joint de scellage 6. Celui-ci est réalisé avec une pâte d'émail dont la température de cuisson pour éliminer les composants organiques est de l'ordre de 450°C. Cette température permet notamment d'éviter un relâchement des contraintes de trempe qui n'apparaît qu'à des températures supérieures. Lors de la réalisation du vitrage 1, le joint de scellage 6 est déposé sur une largeur comprise entre 3 et 4 mm avec une épaisseur d'environ 1,5 mm. Cette épaisseur est ramenée par pressage lors de la phase de cuisson à 0,2 mm entre les deux feuilles de verre, pour être identique à l'épaisseur des espaceurs 4 lorsque ceux-ci sont légèrement écrasés entre les deux feuilles de verre 2 et 3, la largeur du joint est alors d'au moins 10 mm.

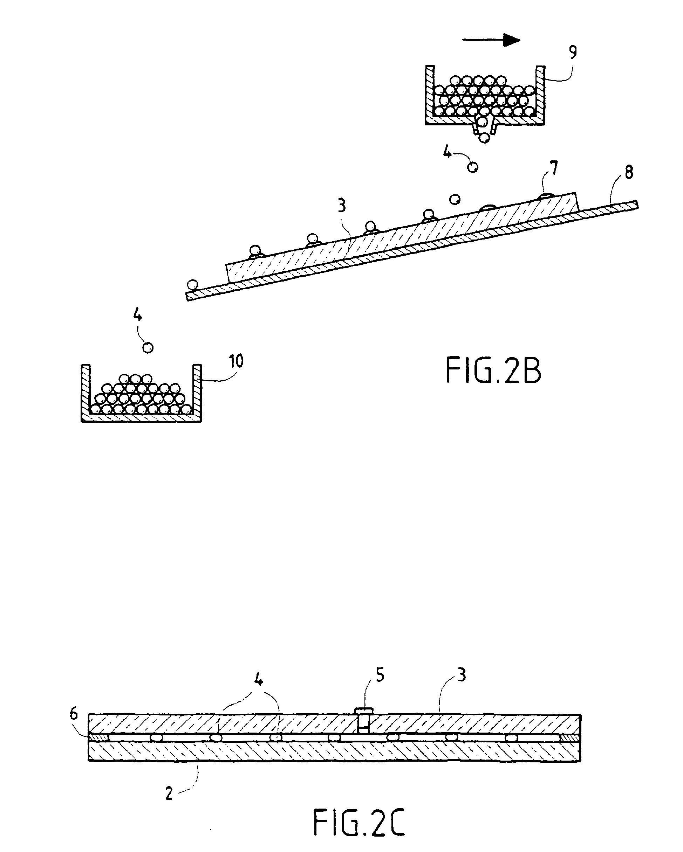

Les figures 2a, b et c illustrent notamment les étapes successives du procédé de réalisation selon l'invention.

Sur la figure 2a, des plots d'émail 7 de collage ont été déposés sur une feuille de verre 3 Ces plots 7 ont par exemple été déposés par sérigraphie avec un écran de soie. Ces plots 7 sont ainsi disposés précisément avec un pas de 30 mm et un diamètre de 0,2 mm.

La figure 2b montre ensuite l'étape de dépose des espaceurs en les faisant rouler. La feuille de verre 3 est déposée sur un plan incliné 8 à 2°. Les espaceurs 4 sont disposés dans un dispositif 9 de saupoudrage qui se déplace au dessus de la feuille de verre 3 en partant de la partie la plus basse. Ainsi la dépose de bas en haut permet d'éviter que les espaceurs prennent de la vitesse et ainsi se positionnent mal sur les plots d'émail 7 ou entrainent de l'émail sur d'autres parties de la feuille de verre 3. Les espaceurs 4 n'ayant pas rencontré de plot d'émail 7 sont recueillis dans un bac 10 pour être réutilisés.

Sur la figure 2c, la seconde feuille de verre 2 a été déposée sur les espaceurs 4 et sur le joint de scellage 6. les plots d'émail 7 de collage présentant une viscosité suffisante pour maintenir les espaceurs en ptace. Le fait que les espaceurs 4 ne soient pas collés à la feuille de verre 2 facilite notamment sa mise en place. De plus, l'absence de ce collage peut éviter les risques de casse lors de l'utilisation du vitrage 1 si les deux feuilles de verre ne subissent pas exactement la même dilatation.

Après l'opération de cuisson durant laquelle à la fois l'émail périphérique de scellage 6 et l'émail de collage 7 sont cuits, il est possible d'effectuer l'opération de vide par le trou 11 prévu à cet effet puis de boucher de trou 11 à l'aide du disque 5 par tous moyens connus de l'homme du métier tels que, par exemple, par le procédé décrit dans la demande de brevet déposée au nom de SAINT-GOBAIN VITRAGE sous le numéro 96/09 632.

Une fois le vide réalisé dans le vitrage 1. les espaceurs 4 sont légèrement écrasés entre les deux feuilles de verre 2 et 3 de manière à présenter des surfaces de contact non ponctuelles.

## Revendications

1. Procédé pour réaliser un vitrage isolant sous vide constitue de deux feuilles de verre maintenues espacées l'une de l'autre par des espaceurs et un joint de scellage périphérique consistant après avoir déposé les espaceurs entre les deux feuilles de verre, à réaliser le joint de scellage en périphérie et à effectuer le vide, **caractérisé en ce qu'**on dépose sur une des feuilles de verre des points de colle d'un diamètre inférieur ou égal au diamètre des espaceurs, **en ce qu'**on fait rouler les espaceurs sur ladite feuille de verre de manière à ce qu'un unique espaceur se colle sur chaque point de colle, et **en ce qu'**on dépose la seconde feuille de verre sur les espaceurs et le joint de scellage périphérique.

2. Procédé pour réaliser un vitrage isolant sous vide selon la revendication 1, **caractérisé en ce qu'**on fait rouler des espaceurs sphériques.

3. Procédé pour réaliser un vitrage isolant sous vide selon la revendication 1 ou 2. **caractérisé en ce que,** lors de l'étape de dépose des espaceurs, la feuille de verre est inclinée d'au moins 1°.

4. Procédé pour réaliser un vitrage isolant sous vide selon l'une des revendications 1 à 3, **caractérisé en ce que** la dépose des points de colle est réalisée par sérigraphie.

5. Procédé pour réaliser un vitrage isolant sous vide selon la revendication 4,
**caractérisé en ce que** les points de colle sont des points d'émail.

6. Procédé pour réaliser un vitrage isolant sous vide selon l'une des revendications 1 à 5, **caractérisé en ce que** durant la phase de réalisation du vide, les espaceurs s'écrasent légèrement.

## Patentansprüche

1. Verfahren zur Herstellung eines Vakuumisolierglases, das aus zwei Glasscheiben besteht, die durch Abstandshalter und eine Umfangsdichtung voneinander beabstandet gehalten werden, welches, nachdem die Abstandshalter zwischen den zwei Glasscheiben aufgebracht worden sind, im Erzeugen der Dichtung am Umfang und im Anlegen des Vakuums besteht, **dadurch gekennzeichnet, dass** auf einer der Glasscheiben Klebepunkte mit einem Durchmesser von kleiner als oder gleich dem der Abstandshalter aufgebracht werden, dass die Abstandshalter derart über die Glasscheibe rollen gelassen werden, dass nur ein einziger Abstandshalter auf jedem Klebepunkt festklebt, und dass die zweite Glasscheibe auf den Abstandshaltern und die Umfangsdichtung angebracht werden.

2. Verfahren zur Herstellung eines Vakuumisolierglases nach Anspruch 1, **dadurch gekennzeichnet, dass** kugelförmige Abstandshalter rollen gelassen werden.

3. Verfahren zur Herstellung eines Vakuumisolierglases nach Anspruch 1 oder 2, **dadurch gekennzeichnet, dass** die Glasscheibe in der Stufe des Aufbringens der Abstandshalter um mindestens 1° geneigt wird.

4. Verfahren zur Herstellung eines Vakuumisolierglases nach einem der Ansprüche 1 bis 3, **dadurch gekennzeichnet, dass** das Aufbringen der Klebepunkte mittels Siebdruck durchgeführt wird.

5. Verfahren zur Herstellung eines Vakuumisolierglases nach Anspruch 4, **dadurch gekennzeichnet, dass** die Klebepunkte Emailpunkte sind.

6. Verfahren zur Herstellung eines Vakuumisolierglases nach einem der Ansprüche 1 bis 5, **dadurch gekennzeichnet, dass** die Abstandshalter in der Phase des Anlegens des Vakuums leicht zusammengedrückt werden.

## Claims

1. Process for producing vacuum insulating glazing, consisting of two sheets of glass held apart by spacers and a peripheral seal, which process consists, after the spacers have been deposited between the two sheets of glass, in sealing around the periphery and in creating a vacuum, **characterized in that** spots of adhesive with a diameter less than or equal to the diameter of the spacers are deposited on one of the sheets of glass, **in that** the spacers are made to roll over the said sheet of glass so that only a single spacer adheres to each spot of adhesive and **in that** the second sheet of glass is deposited on the spacers and the peripheral seal.

2. Process for producing vacuum insulating glazing according to Claim 1, **characterized in that** spherical spacers are made to roll.

3. Process for producing vacuum insulating glazing according to Claim 1 or 2, **characterized in that** the sheet of glass is inclined by at least 1° during the step of depositing the spacers.

4. Process for producing vacuum insulating glazing according to one of Claims 1 to 3, **characterized in that** the spots of adhesive are deposited by screen printing.

5. Process for producing vacuum insulating glazing according to Claim 4, **characterized in that** the spots of adhesive are spots of enamel.

6. Process for producing vacuum insulating glazing according to one of Claims 1 to 5, **characterized in that** the spacers are compressed slightly during the phase of creating the vacuum.
